## Europäisches Patentamt
## European Patent Office
## Office européen des brevets

(19)

(11) Veröffentlichungsnummer: **0 264 622 B1**

(12)

# EUROPÄISCHE PATENTSCHRIFT

(45) Veröffentlichungstag der Patentschrift: **13.03.91**

(51) Int. Cl.⁵: **G01B 11/16**, G01L 1/24, G02B 6/44

(21) Anmeldenummer: **87113527.3**

(22) Anmeldetag: **16.09.87**

(54) Verfahren zum Überwachen der Verformungen von Bauteilen mit Lichtwellenleitern.

(30) Priorität: **15.10.86 DE 3635053**

(43) Veröffentlichungstag der Anmeldung:
**27.04.88 Patentblatt 88/17**

(45) Bekanntmachung des Hinweises auf die
Patenterteilung:
**13.03.91 Patentblatt 91/11**

(84) Benannte Vertragsstaaten:
**AT BE CH DE ES FR GB IT LI SE**

(56) Entgegenhaltungen:
EP-A- 0 166 621          DE-A- 3 015 391
DE-A- 3 131 870          DE-A- 3 305 234
DE-A- 3 415 855          DE-A- 3 526 966
DE-B- 2 757 786

(73) Patentinhaber: **STRABAG BAU - AG**
**Siegburger Strasse 241 Postfach 211120**
**W-5000 Köln 21(DE)**

(72) Erfinder: **Wolff, Reinhard, Dr. Ing.**
**Wodanstrasse 26**
**W-5000 Köln 91(DE)**
Erfinder: **Weiser, Martin, Dipl.-Ing.**
**Im Falkenhorst 6/61**
**W-5000 Köln 90(DE)**
Erfinder: **Miesseler, Hans-Joachim, Dipl.-Ing.**
**Im Grünen Winkel 31**
**W-5000 Köln 90(DE)**

(74) Vertreter: **Hennicke, Albrecht, Dipl.-Ing. et al**
**Patentanwälte Dipl.-Ing. Buschhoff Dipl.-Ing.**
**Hennicke Dipl.-Ing. Vollbach Kaiser-**
**Wilhelm-Ring 24 Postfach 190 408**
**W-5000 Köln 1(DE)**

**Beschreibung**

Die Erfindung betrifft ein Bauteil mit Lichtwellenleitern, die zum Überwachen der Verformungen des Bauteiles dienen und unter mechanischer Vorspannung an oder in dem Bauteil befestigt sind.

Es ist bekannt, Bauteile von Maschinen und Fahrzeugen, insbesondere von Flugzeugen, aber auch die Bauteile von Bauwerken mit Hilfe von Lichtwellenleitern zu überwachen, um frühzeitig Verformungen festzustellen, die einen Bruch oder ein sonstiges Versagen des Bauteiles in der Maschine oder im Bauwerk ankündigen. Die hierbei verwendeten Lichtwellenleiter haben eine oder mehrere sehr dünne Lichtleitfasern aus Quarzglas mit hohem Brechungsindex und sind in einem Schutzmantel aus Faserverbundwerkstoff, z.B. GFK, eingebettet. Eine Dehnung der Lichtwellenleiter in Längsrichtung führt zu einer Querkontraktion der Lichtleitfaser, die einen Dämpfeffekt für die durch die Lichtleitfaser hindurchgeschickten Lichtimpulse zur Folge hat. Dieser Dämpfeffekt ist ein Maß für die Dehnung der Lichtleitfaser. Wird die Elastizitätsgrenze der Lichtleitfaser überschritten, so kommt es zum Bruch der Lichtleitfaser, die an der Bruchstelle den Lichtimpuls nicht weiterleitet, sondern reflektiert. Aus der nicht mehr vorhandenen Durchgängigkeit der Lichtleitfaser und der vom Meßgerät gemessenen Lichtlaufzeiten kann die Entfernung der Bruchstelle vom Meßgerät bzw. vom Ende des Lichtwellenleiters bestimmt werden.

Bei der Überwachung von auf Zug beanspruchten Bauteilen ist es bekannt, den Lichtwellenleiter auf der Außenseite eines zu überwachenden Bauteiles aufzukleben oder den Lichtwellenleiter in das Bauteil einzubetten (DE-OS 29 37 824). Anfang und Ende des Lichtwellenleiters werden dann mit einem LichtDurchgangsprüfgerät verbunden, mit dem die Durchgängigkeit eines Lichtstrahles durch den Lichtleiter und die Dämpfung des Lichtstrahles im Lichtleiter überwacht wird.

Es ist auch bekannt, ein Bauteil zum Überwachen von dessen Verformungen mit Lichtwellenleitern zu versehen, die vorgespannt und kraftschlüssig mit dem Bauteil verbunden werden (DE 31 31 870 A2). Je nach Gestalt des Bauteiles werden die Lichtwellenleiter unter Vorspannung um das Bauteil herumgewickelt, oder sie werden in Kunststoffschläuchen geführt und an ihren Enden im Bauteil verankert. Mit dieser bekannten Anordnung der Lichtwellenleiter ist es nur möglich, einen bestimmten Zustand an einer bestimmten Stelle des Bauteiles zu erfassen, der dann eintritt, wenn der vorgespannte Lichtwellenleiter bricht. Es ist jedoch nicht möglich, Verformungen eines Bauteiles quantitativ über dessen Länge festzustellen.

Es ist ferner bekannt, ein Bewehrungselement, nämlich einen Draht aus Faserverbundwerkstoff mit einem Lichtwellenleiter als Sensor zu versehen (DE 33 05 234 Al). Dieser Lichtwellenleiter ist auf seiner ganzen Länge mit dem Bauteil, d.h. mit dem Bewehrungsdraht verbunden, diesem gegenüber aber nicht vorgespannt.Er kann deshalb nur zur Überwachung solcher Bauteile eingesetzt werden, die ausschließlich auf Zug beansprucht und gedehnt werden.

Es ist auch bekannt, Lichtleitfasern in einem Bauteil so einzubetten, daß sie bei einer Biegung des Bauteiles tordiert werden (DE 34 15 855 Al). Bei diesem Bauteil und bei anderen Bauteilen, bei denen auch die Lichtwellenleiter bei der Beanspruchung des Bauteiles nur auf Zug beansprucht werden (DE 30 15 391 Al), sind Anfang und Ende der Lichtwellenleiter stets zugänglich und können dauernd beobachtet werden.

Mit diesen bekannten Verfahren und Anordnungen können nur solche Bauteile zuverlässig überwacht werden, in denen ausschließlich Zugspannungen auftreten. Dagegen ist eine Überwachung von Bauteilen mit über den Querschnitt verteilten, unterschiedlichen Spannungszuständen nicht möglich. Derartige Bauteile sind beispielsweise Teile eines Bauwerkes, die auf Zug und Druck und/oder Biegung beansprucht werden und bei denen über die Länge des Bauteiles im Querschnitt unterschiedliche Spannungszustände auftreten. Die bekannten Lichtwellenleiter haben nämlich die Eigenart, daß sich die Lichtleitfähigkeit der Lichtleitfasern auch unter der Einwirkung von Längsdruckkräften ändert, wenn also die Lichtleitfasern einer Stauchung unterworfen werden. Ist dann ein Lichtwellenleiter auf seiner ganzen Länge mit einem Bauteil verbunden, bei dem Bereiche mit Zugspannungen und Druckspannungen abwechseln, wird auch der am Bauteil befestigte Lichtwellenleiter streckenweise gedehnt und streckenweise gestaucht, wobei sowohl durch die Dehnungen als auch durch die Stauchungen Kräfte auf die Lichtleitfaser ausgeübt werden, welche in dieser Dämpfungen zur Folge haben, die nicht mehr einer bestimmten Beanspruchung zugeordnet werden können.

Die bekannten Anordnungen der Lichtwellenleiter lassen auch bei solchen Bauteilen keine genaue Überwachung mehr zu, die zeitabhängigen Verformungen, beispielsweise einem Schwinden oder einem Kriechen unter Last unterworfen sind. Bei solchen Bauteilen, die sich unter Last oder einfach durch Verringerung ihres Volumens im Laufe der Zeit verkürzen, wird auf die fest mit ihnen verbundenen Lichtwellenleiter eine Stauchung ausgeübt, die zu Fehlmessungen führt.

Aufgabe der Erfindung ist es, Lichtwellenleiter in oder an Bauteilen so anzuordnen, daß mit ihnen auch wechselnde oder schwellende Beanspruchungen oder zeitabhängige Verformungen erfaßt werden können.

Diese Aufgabe wird mit der Erfindung dadurch gelöst, daß die Lichtwellenleiter mindestens auf einer Teillänge des Bauteiles mit diesem fest verbunden und so weit vorgespannt sind, daß sie auch bei im Bauteil auftretenden Druck-, Schwind- oder Kriechverformungen auf Zug beansprucht werden.

Diese Ausgestaltung hat den Vorteil, daß nicht nur Dehnungen, sondern auch Stauchungen des zu überwachenden Bauteiles meßbar werden, da sie sich nur als eine Verringerung der Vordehnung der Lichtwellenleiter darstellen, die definierbare Dämpfungsänderungen der Lichtleitfasern zur Folge hat. Hierbei ist es gleichgültig, wodurch dieser Abbau der Vordehnung hervorgerufen wird. Die Lichtwellenleiter können deshalb nicht nur Bauteile überwachen, bei denen über die Länge des Bauteiles Druckbereiche mit Zugbereichen abwechseln, wie dies beispielsweise bei Durchlaufträgern von Bauwerken der Fall ist, sondern sie können auch zur Überwachung solcher Bauteile eingesetzt werden, die zeitabhängigen Verformungen unterworfen sind, beispielsweise zur Überwachung von vorgespannten Bauteilen, die nicht nur schwinden, sondern unter ihrer Vorspannung auch kriechen. Außerdem eignen sich vorgespannte Lichtwellenleiter auch zur Überwachung von Maschinenteilen, wie doppeltwirkenden Kolben oder Pleuelstangen, die sowohl auf Zug als auch auf Druck beansprucht werden.

Die Lichtwellenleiter können am Bauteil geradlinig oder gekrümmt entlanggeführt, in situ mechanisch vorgespannt und danach auf ihrer ganzen Länge fest mit dem Bauteil verbunden werden. Hierbei ist es möglich, die Lichtwellenleiter am Bauteil außen anzukleben oder im Werkstoff des Bauteiles unmittelbar einzubetten oder in Hüllrohren zu führen, die außen am Bauwerk angebracht sind oder im Inneren des Bauteiles verlegt sind. Nach dem Verlegen in Hüllrohren können diese Hüllrohre mit einer Masse verpreßt werden, die den Lichtwellenleiter mit dem Hüllrohr auf ganzer Länge fest verbinden, so daß der Verbund mit dem Bauteil hergestellt ist.

Um in einem Bauteil, welches sowohl Zug- als auch Druckbeanspruchungen unterworfen ist, mit in Längsrichtung geradlinig durchlaufenden Lichtwellenleitern nur die Dehnungen zu erfassen, ist es zweckmäßig, die Lichtwellenleiter nur im Bereich der Zugzonen mit dem zu überwachenden Bauteil fest zu verbinden, den Lichtwellenleiter im übrigen aber gegenüber dem Bauteil längsbeweglich zu führen, bevor er an das Meßgerät angeschlossen ist. Für eine solche Anordnung ist die Verlegung der Lichtwellenleiter in Hüllrohren günstig, wo dann die Hüllrohre nur im Zugbereich des Bauteiles nach dem Vorspannen der Lichtwellenleiter verpreßt werden. Die Lichtwellenleiter erfassen dann nur Dehnungen im Zugbereich, während Stauchungen im Druckbereich ohne Einfluß auf die Lichtwellenleiter bleiben, welche Stauchungen die Empfindlichkeit der Messung herabsetzen.

Die Meßgenauigkeit kann nach der Erfindung auch dadurch erhöht werden, daß die Lichtwellenleiter dem Zugspannungsverlauf folgend am oder im Bauteil angeordnet werden. Die Lichtwellenleiter werden dann beispielsweise bie Durchlaufträgern über den Stützungen im oberen Teil und in den Feldern zwischen den Stützungen im unteren Teil des Durchlaufträgers verlegt und ähnlich wie die Spannglieder in einem vorgespannten Durchlaufträger angeordnet. Hierbei ist es auch möglich, die Lichtwellenleiter zusammen mit den Spanndrähten im Hüllrohr eines Spanngliedes zu verlegen. Die Lichtwellenleiter können aber auch separat im Inneren des Bauteiles dem Zugspannungsverlauf folgend in eigenen Hüllrohren untergebracht oder auf der Außenfläche des Bauteiles, beispielsweise an der Seitenwand eines Balkens, eines Maschinenfundamentes oder eines Fahrzeugteiles, angeklebt werden.

Lichtwellenleiter bestehen üblicherweise aus mindestens einer Lichtleitfaser und einer diese umgebenden Umhüllung, die aus Faserverbundwerkstoff oder zweckmäßigerweise aus einem Kunststoff, z.B. Polyamid oder Polyurethan, hergestellt sein kann. Der Einbau und die Handhabung der Lichtwellenleiter wird bedeutend erleichtert, wenn bereits bei der Herstellung der Lichtwellenleiter die Lichtleitfasern gegen ihre Umhüllung vorgespannt und in diesem Zustand am Bauteil angebracht oder in diesem eingebettet werden. Der Lichtwellenleiter hat dann einen inneren Spannungszustand, wobei sich die vorgespannte Lichtleitfaser gegen ihre Umhüllung abstützt. Der Lichtwellenleiter braucht dann nicht mehr vor Ort vorgespannt zu werden, sondern kann in seiner vorgefertigten Form einfach an dem zu überwachenden Bauteil befestigt und auf seiner ganzen Länge mit diesem verbunden werden. Derartige, in sich vorgespannte Lichtwellenleiter können mit besonderem Vorteil zur Überwachung von vorgespannten Bauteilen eingesetzt werden, die infolge ihrer Vorspannung zunächst auf Druck beansprucht werden und unter dieser Druckvorspannung schwinden und kriechen.

Weitere Merkmale und Vorteile der Erfindung ergeben sich aus der nachfolgenden Beschreibung und den Anwendungsbeispielen, die durch die Zeichnung näher erläutert werden. Es zeigt:

Fig. 1     eine frei aufliegende Stahlbetonplatte im Längsschnitt mit im Tragwerksbeton eingebetteten, vorgespannten Lichtwellenleitern,

Fig. 2     den Gegenstand der Fig. 1 in einem Teilquerschnitt nach Linie II-II,

Fig. 3    einen als Fischbauchträger ausgebil-
          deten Randbalken eines frei auflie-
          genden Plattenbalkens in einer seitli-
          chen Ansicht mit auf der Unterseite
          aufgeklebten, vorgespannten Lichtwellenleitern,

Fig. 4    den Gegenstand der Fig. 3 in einem
          Querschnitt nach Linie IV-IV,

Fig. 5    einen rechteckigen, über zwei Felder
          sich erstreckenden Durchlaufträger
          mit im Inneren des Trägers verlegtem
          Lichtwellenleiter in einer Seitenansicht,

Fig. 6    den Gegenstand der Fig. 5 im Querschnitt nach Linie VI-VI,

Fig. 7    einen über zwei Felder durchlaufenden Plattenbalken aus Spannbeton
          mit in Hüllrohren verlegten, vorge-
          spannten Lichtwellenleitern im Längs-
          schnitt,

Fig. 8    den Gegenstand der Fig. 7 in einem
          Querschnitt nach Linie VIII-VIII,

Fig. 9    eine im Maschinen- oder Fahrzeugbau verwendbare Gelenkstange aus
          Stahl mit einem auf zwei einander
          gegenüberliegenden Seiten auf den
          äußeren Umfang aufgeklebten, vorgespannten Lichtwellenleiter in einer
          seitlichen Ansicht und

Fig. 10   einen vorgespannten Lichtwellenleiter
          nach der Erfindung in einer perspekti-
          vischen Teildarstellung in stark ver-
          größertem Maßstab.

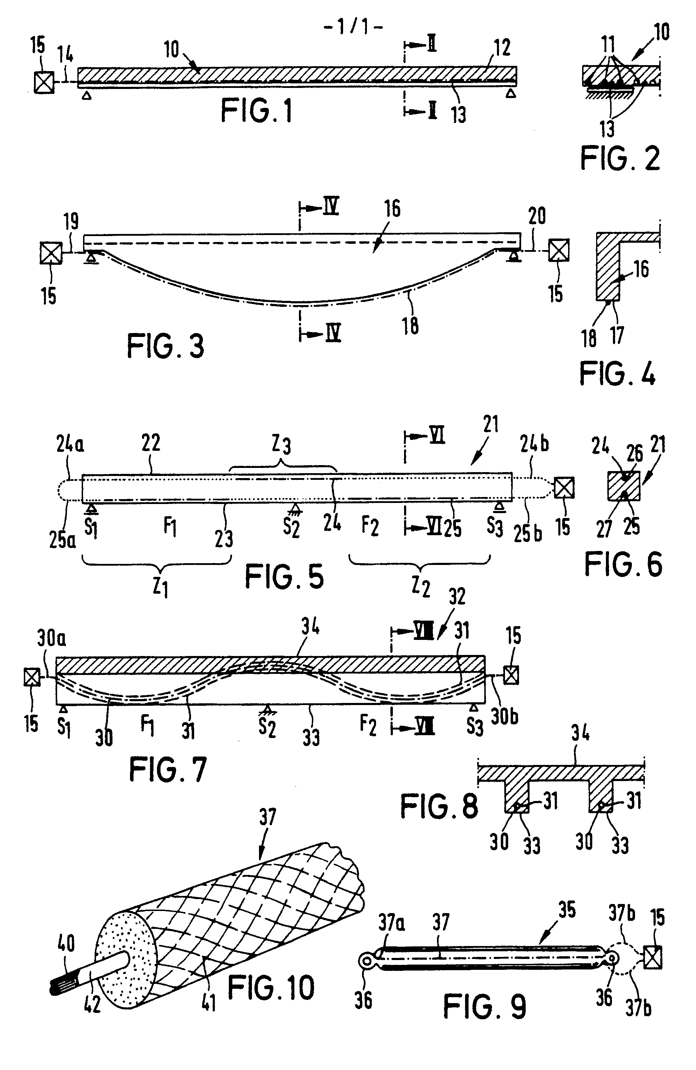

In den Fig. 1 und 2 ist eine Spannbetonplatte 10 dargestellt, deren Spanndrähte 11 im Spannbett vorgespannt werden, bevor der Beton 12 in die Schalung eingegeben wird und erhärtet. Zwischen den Spanndrähten 11 sind Lichtwellenleiter 13 ange ordnet, die sich parallel zu den Spannstahldrähten 11 erstrecken und ebenso wie diese vor dem Einbringen des Betons 12 im Spannbett mechanisch soweit vorgespannt werden, daß ihre Beanspruchung bei allen Beanspruchungen, denen die Spannbetonplatte nach ihrem Einbau unterworfen ist, im Zugbereich bleibt.

Nach dem Einbr ingen und Erhärten des Betons 12 werden die Spannstahldrähte 11 und die Lichtwellenleiter 13 aus ihren Verankerungen am Spannbett gelöst, bevor die Spannbetonplatte 10 aus ihrer Schalung herausgenommen wird. Die Spannstahldrähte 11 übertragen dann die ihnen innewohnende Spannkraft durch Haftreibungsverbund auf den Beton 12, so daß dieser in Längsrichtung der Spanndrähte 11 unter Druckvorspannung gesetzt wird. Ebenso wie die Spanndrähte 11 stützen sich auch die Lichtwellenleiter, die nach dem Erhärten des Betons mit diesem auf ganzer Länge durch Haftreibung verbunden sind, gegen den Beton ab.

Die Lichtwellenleiter 13 sind zwischen den Stahldrähten 11 im Grundriß der Platte 10 geführt, und ihre beiden Enden 14 sind an ein Meßgerät 15 angeschlossen, welches Lichtimpulse durch die Lichtwellenleiter 13 sendet und diese wieder empfängt.

Unter ihrem Eigengewicht und unter Gebrauchslast wird die Spannbetonplatte 10 auf Biegung beansprucht, wodurch an ihrer Unterseite Zugspannungen und an ihrer Oberseite Druckspannungen auftreten. Diesem äußeren Spannungszustand sind innere Druckspannungen überlagert, die von den vorgespannten Stahldrähten im Betonquerschnitt erzeugt werden und die in der Spannbetonplatte schon wirksam sind, bevor diese eingebaut wird und unter Gebrauchslast kommt. Unter dem Einfluß der Vorspannung beginnt der Beton zu kriechen, d.h. der Beton wird unter der Druckvorspannung gestaucht und die Spannbeton platte in Längsrichtung kürzer. Hierbei verkürzen sich auch die im Beton eingebetteten Lichtwellenleiter, die ja mit dem Beton auf ganzer Länge fest verbunden sind, um das gleiche Maß. Da die Lichtwellenleiter jedoch vor ihrer Umhüllung mit Beton vorgespannt wurden und eine Vordehnung erhalten haben, hat ihre Verkürzung infolge des Kriechens des sie umgebenden Betons nur eine Verringerung der Dehnung der Lichtwellenleiter zur Folge, ohne daß hierbei der Dehnungsnullpunkt unterschritten wird. Die Lichtwellenleiter werden also durch die Kriechverformung der Spannbetonplatte nicht gestaucht, sondern sie bleiben im Zugbereich. Nach dem Einbau des vorgespannten Bauteiles 10 in ein Bauwerk und nach dem Aufbringen der Gebrauchslast können sie dann die Verformungen des Bauteiles überwachen, die dieses unter der Gebrauchslast erleidet, welche die Spannbetonplatte 10 auf Biegung beanspruchen und auf ihrer Unterseite Zugspannungen erzeugen, die sich als Dehnungen des Lichtwellenleiters darstellen, die eine Änderung der Dämpfung des Lichtes in den Lichtwellenleitern zur Folge haben, die von dem optischen Meßgerät 15 erfaßt und ausgewertet werden kann.

In den Fig. 3 und 4 ist das zu überwachende Bauteil ein Plattenbalken 16 aus Stahlbeton oder Spannbeton, der als Fischbauchträger ausgebildet ist und an dessen Unterseite 17 ein Lichtwellenleiter 18 angebracht ist, dessen beide Enden 19 und 20 an Lichtmeßgeräte 15 angeschlossen sind. Bei dem hier dargestellten Ausführungsbeispiel wurde der Lichtwellenleiter 18 nach dem Anlegen am Plattenbalken 16 mechanisch vorgespannt und danach auf seiner ganzen Länge mit dem Balken 16 verklebt.

In den Fig. 5 und 6 ist ein im Querschnitt rechteckiger Stahlbetonbalken 21 dargestellt, der sich als Durchlaufträger über zwei Felder $F_1$ und

$F_2$ erstreckt und auf drei Stützungen $S_1$, $S_2$ und $S_3$ ruht. An der Oberseite 22 und an der Unterseite 23 des Balkens 21 sind Lichtwellenleiter 24 und 25 verlegt, die an ihren linken Enden 24a bzw. 25a miteinander verbunden und mit ihren rechten Enden 24b bzw. 25b an ein Lichtmeß-und - überwachungsgerät 15 angeschlossen sind. Die Lichtwellenleiter 24 und 25 befinden sich in Hüllrohren 26 bzw. 27, von denen das eine Hüllrohr 26 am oberen Rand 22 und von denen das andere Hüllrohr 27 am unteren Rand 23 des Balkens geradlinig und parallel zur Längsachse des Balkens geführt und im Bauwerkbeton eingebettet ist. Die Hüllrohre, die Schläuche aus Metall oder Kunststoff oder auch dünnwandige Blechrohre sein können, werden vor dem Betonieren des Balkens 21 in der Schalung des B auteiles verlegt und einbetoniert. Die Lichtwellenleiter können vor oder nach dem Betonieren in die Hüllrohre eingezogen werden. Nach dem Erhärten des Betons werden sie mechanisch vorgespannt und jeweils im Zugspannungsbereich $Z_1$, $Z_2$ und $Z_3$ durch Einpressen einer am Lichtwellenleiter und am Hüllrohr festhaftenden, erhärtenden Masse mit dem Hüllrohr verbunden. Die unter Längsvorspannung mit den Hüllrohren fest verbundenen Teile der Lichtwellenleiter 24 und 25 sind in der Zeichnung in strichpunktierten Linien dargestellt und man erkennt, daß sie sich am unteren Rand des Balkens 21 im Bereich der Felder $F_1$ und $F_2$ und am oberen Rand 22 des Balkens 21 über der mittleren Stützung $S_2$ befinden. Außerhalb der Zugbereiche $Z_1$, $Z_2$ und $Z_3$ sind die Lichtwellenleiter 24 und 25 in ihren Hüllrohren 26 und 27 längsbeweglich geblieben, was in Fig. 5 durch punktierte Linien dargestellt ist. Die längsbeweglichen Lichtwellenleiter verlaufen im Bauwerk in solchen Zonen, in denen keine Zugspannungen auftreten. Es ist aber darauf hinzuweisen, daß die Lichtwellenleiter 24 und 25 auch auf ihrer gesamten Länge nach dem Vorspannen mit den Hüllrohren fest verbunden werden können, wenn nach der Erfindung ihre Vorspannung und damit ihre Vordehnung so groß ist, daß ihre Zugbeanspruchung auch in den Druckzonen des Bauteiles erhalten bleibt.

In den Fig. 7 und 8 ist die Erfindung am Beispiel eines Durchlaufträgers mit Plattenbalkenquerschnitt dargestellt, bei dem die Lichtwellenleiter dem Zugspannungsverlauf folgend im Bauteil angeordnet sind.

Ebenso wie bei dem in den Fig. 5 und 6 dargestellten Ausführungsbeispiel befinden sich die Lichtwellenleiter 30 in Hüllrohren 31, die in Längsrichtung des Trägers 32 wellenförmig so geführt sind, daß sie sich immer in den Zugzonen des jeweiligen Trägerquerschnittes befinden. Die Hüllrohre 31 mit den Lichtwellenleitern 30 verlaufen also in den Feldern $F_1$ und $F_2$ in der Nähe des unteren Randes 33 und über der Stützung $S_2$ in der Nähe des oberen Randes 34 des Plattenbalkens, während ihre aus dem Bauteil 32 herausgeführten Enden 30a und 30b an Lichtmeß-und -überwachungsgeräte 15 angeschlossen sind. Wie bei dem zuvor beschriebenen Ausführungsbeispiel werden auch hier die Hüllrohre 31 in der aus Fig. 7 ersichtlichen Lage in der Schalung des Betonbauteiles verlegt und einbetoniert. Die eingezogenen Lichtwellenleiter werden dann unter Vorspannung gesetzt und auf ihrer gesamten Länge mit dem Hüllrohr durch Einpressen einer Masse in das Hüllrohr verbunden, welche fest am Lichtwellenleiter und am Hüllrohr haftet und so den Verbund zwischen Lichtwellenleiter und Bauteil herstellt.

Es ist darauf hinzuweisen, daß auch die in den Fig. 3 bis 7 dargestellten Bauteile 16, 21 und 32 unter Längsvorspannung gesetzt werden können, wenn sie aus Beton bestehen und eine günstige Beanspruchung erreicht werden soll. Insbesondere in diesem Falle werden sie eine Kriechverformung erleiden, die sich auch auf die einbetonierten oder angeklebten Lichtwellenleiter auswirkt und deren Vorspannung erforderlich macht, wenn eine einwandfreie Überwachung im Gebrauchszustand gewährleistet sein soll.

In Fig. 9 ist eine Gelenkstange 35 aus Stahl dargestellt, wie sie im Maschinenbau und im Fahrzeugbau oft Verwendung findet und die an ihren beiden Enden mit Gelenkösen 36 versehen ist. Die Gelenkstange 35 kann in Längsrichtung auf Zug oder Druck beansprucht werden. Um ihre Beanspruchung zu überwachen, sind auf diametral gegenüberliegenden Seiten der Stange in deren Längsrichtung Lichtwellenleiter 37 aufgeklebt, die an ihrem einen Ende 37a miteinander verbunden sind und deren andere Enden 37b an ein Lichtmeß- und -überwachungsgerät 15 angeschlossen sind. Die hierbei verwendeten Lichtwellenleiter 37 sind nicht gegen das Bauteil 35, sondern in sich selbst vorgespannt, d.h. sie haben einen Eigenspannungszustand. Ein derartiger Lichtwellenleiter 37 ist in Fig. 10 schematisch dargestellt.

Dieser Lichtwellenleiter 37 besteht a us einer Lichtleitfaser 40 aus Quarzglas oder einem anderen, lichtleitenden Material, die in einer Umhüllung 41 aus Faserverbundwerkstoff eingebettet ist. Um einen guten Haftverbund zwischen Lichtleitfaser und Faserverbundwerkstoff zu erzielen, kann auf den äußeren Umfang der Lichtleitfaser 40 auch noch eine Zwischenschicht 42 mit rauher Oberfläche oder eine Drahtwendel aufgebracht sein, die zusätzlich die Ansprechempfindlichkeit des Lichtwellenleiters bei dessen Längsdehnung erhöht, wie dies an sich bekannt ist. Gegenüber den bekannten Ausführungen hat der Lichtwellenleiter in einem Bauteil nach der Erfindung jedoch die Besonderheit, daß die Lichtleitfaser 40 gegen die sie umgebende Umhüllung 41 vorgespannt und unter axialer Zugspannung auf ihrer ganzen Länge mit der Umhüllung 41 verbunden ist. Es herrscht also im Lichtwellenleiter ein innerer Spannungszustand

Lichtwellenleiter der in Fig. 10 gezeigten und bei der Gelenkstange nach Fig. 9 verwendeten Art können in einfacher Weise so hergestellt werden, daß beim Zusammenführen der Lichtleitfaser mit ihrer Umhüllung in der von einer Haspel abgezogenen Lichtleitfaser durch Bremsen der Haspel eine Zugspannung erzeugt und solange aufrechterhalten wird, bis die Umhüllung erhärtet ist und eine nicht mehr lösbare Verbindung zwischen der Lichtleitfaser und der sie umgebenden Umhüllung hergestellt ist. Die Bremswirkung der Haspel ist zweckmäßigerweise veränderbar, so daß die Vorspannung der Lichtleitfaser gegenüber ihrer Umhüllung verändert und den jeweiligen Anforderungen angepaßt werden kann.

Der auf diese Weise hergestellte, in sich vorgespannte Lichtwellenleiter kann in beliebigen Längen von einem Vorrat abgeschnitten und ohne weitere Vorbereitung schlaff an dem jeweils zu überwachenden Bauteil in beliebiger, insbesondere auch gekrümmter Linienführung befestigt, beispielsweise angeklebt oder in dessen Masse eingebracht werden. Er kann statt einer Lichtleitfaser auch mehrere Lichtleitfasern aufweisen, die in der gleichen Umhüllung untergebracht sind und die auch unterschiedlich vorgespannt werden können, um den gleichen Lichtwellenleiter für verschiedene Lastbereiche einsetzen zu können, wobei dann entweder die eine oder die andere oder auch beide Lichtleitfasern an das optische Meß- und Überwachungsgerät angeschlossen werden.

Die Erfindung ist nicht auf die dargestellten und beschriebenen Ausführungsbeispiele beschränkt, sondern es sind mehrere Änderungen und Ergänzungen möglich, ohne den Rahmen der in den Patentansprücsh angegebenen Erfindung zu verlassen. Beispielsweise ist es möglich, die Lichtwellenleiter von mehreren Bauteilen miteinander zu verbinden und gemeinsam an ein optisches Meß- und Auswertegerät anzuschließen. Ferner können sowohl gegen das Bauteil als auch in sich selbst vorgespannte Lichtwellenleiter zur Überwachung der verschiedensten Bauteile von Fahrzeugen, Maschinen, Bauwerken etc. Verwendent werden, die schwellenden oder wechseinden Verformungen und Beanspruchungen unterworfen sind.

**Ansprüche**

1. Bauteil (10; 16; 21; 32; 35) mit Lichtwellenleitern (13; 18; 24; 25; 30; 37), die zum Überwachen der Verformungen des Bauteiles dienen und unter mechanischer Vorspannung an oder in dem Bauteil befestigt sind, **dadurch gekennzeichnet,** daß die Lichtwellenleiter (13; 18; 24; 25; 30; 37) mindestens auf einer Teillänge des Bauteiles mit diesem fest verbunden und soweit vorgespannt sind, daß sie auch bei im Bauteil (10; 16; 21; 32; 35) auftretenden Druck-, Schwind- oder Kriechverformungen auf Zug beansprucht werden.

2. Bauteil nach Anspruch 1, **dadurch gekennzeichnet,** daß die Lichtwellenleiter (24; 25; 30) in Hüllrohre (26; 27; 31) eingezogen sind, die innerhalb oder außerhalb des Bauteiles (21; 32 bzw. 16) angeordnet und mit diesem fest verbunden sind und daß die Lichtwellenleiter (24; 25; 30) in den Hüllrohren (26;27; 31) mechanisch vorgespannt und durch Verpressen des Hüllrohres (26; 27; 31) mit einer an diesem und am Lichtwellenleiter (24; 25; 30) haftenden Masse auf mindestens einem Teil ihrer Länge mit dem Hüllrohr (26; 27; 31) fest verbunden werden, wodurch die in ihnen erzeugte Zugkraft auf das Hüllrohr abgesetzt wird.

3. Bauteil nach Anspruch 1 oder 2, **dadurch gekennzeichnet,** daß die Lichtwellenleiter (30) dem Zugspannungsverlauf folgend am oder im Bauteil (32) angeordnet sind.

4. Bauteil nach Anspruch 1 oder 2, **dadurch gekennzeichnet,** daß die Lichtwellenleiter (13; 24; 25; 37) parallel zur Kraftrichtung an den Außenflächen oder im Inneren des Bauteiles (10; 21; 35) angeordnet sind.

5. Bauteil nach einem der Ansprüche 2 bis 4, **dadurch gekennzeichnet,** daß die Lichtwellenleiter (24; 25) nur im Zugspannungsbereich (Z1; Z2; Z3;) des Bauteiles (21) mit den sie umgebenden Hüllrohren (26; 27) fest verbunden und in den anderen Bereichen lose in den Hüllrohren (26; 27) geführt sind.

6. Bauteil nach einem der Ansprüche 1 bis 5, **dadurch gekennzeichnet,** daß die Lichtwellenleiter (13; 18) am Ort ihrer Verlegung vorgespannt und auf ihrer ganzen Länge mit dem Bauteil durch Verklebung oder Einbetten in seine Masse verbunden sind.

7. Bauteil nach einem der Ansprüche 1 bis 5, mit mindestens einer Lichtleitfaser in einer diese umgebenden Umhüllung, **dadurch gekennzeichnet,** daß die Lichtleitfaser (40) gegen die sie umgebende Umhüllung (41) vorgespannt und unter axialer Zugspannung auf ihrer ganzen Länge mit der Umhüllung (41) verbunden ist.

## Claims

1.  Component (10; 16; 21; 32; 35) with optical waveguides (13; 18; 24; 25; 30; 37) which serve to monitor the deformations of the component and are fastened on or in the component under mechanical prestress, characterized in that the optical waveguides (13; 18; 24; 25; 30; 37) are firmly bonded to the component over at least part of its length and are prestressed to such an extent that they are subjected to tensile stress even when deformations due to compression, shrinkage or creep occur in the component (10; 16; 21; 32; 25).

2.  Component according to Claim 1, characterized in that the optical waveguides (24; 25; 30) are enclosed in substrate tubes (26; 27; 31), which are arranged inside or outside the component (21; 32 or 16) and are firmly bonded to the latter and in that the optical waveguides (24; 25; 30) are mechanically prestressed in the substrate tubes (26; 27; 31) and are firmly bonded over at least a part of their length to the substrate tube (26; 27; 31) by pressing of the substrate tube (26; 27; 31) with an adhesive compound on the latter and on the optical waveguide (24; 25; 30), as a result of which the tensile force generated in the said optical waveguides is passed on to the substrate tube.

3.  Component according to Claim 1 or 2, characterized in that the optical waveguides (30) are arranged so as to follow the path of the tensile stress on or in the component (32).

4.  Component according to Claim 1 or 2, characterized in that the optical waveguides (13; 24; 25; 37) are arranged parallel to the directional force on the outside surfaces or inside the component (10; 21; 35).

5.  Component according to one of Claims 2 to 4, characterized in that the optical waveguides (24; 25) are firmly bonded to the substrate tubes (26; 27) surrounding them only in the region of tensile stress (Z1; Z2; Z3) of the component (21) and are led freely in the substrate tubes (26; 27) in the other regions.

6.  Component according to one of Claims 1 to 5, characterized in that the optical waveguides (13; 18) are prestressed at the location where they are laid and are bonded over their entire length to the component by adhesion or by embedding in its material.

7.  Component according to one of Claims 1 to 5, having at least one optical fibre in a covering surrounding the latter, characterized in that the optical fibre (40) is prestressed with respect to the covering (41) surrounding it and is bonded to the covering (41) under axial tensile stress over its entire length.

## Revendications

1.  Elément constructif (10; 16; 21; 32; 35) avec des guides d'ondes lumineuses (13; 18; 24; 25; 30; 37), qui servent à surveiller les déformations de l'élément constructif et qui sont fixés sous précontrainte mécanique sur ou dans l'élément constructif, **caractérisé** en ce que les guides d'ondes lumineuses (13; 18; 24; 25; 30; 37) sont assemblés rigidement à l'élément constructif au moins sur une longueur partielle de ce dernier et sont suffisamment précontraints pour être sollicités en traction même en présence de déformations de compression, de contraction ou de fluage apparaissant dans l'élément constructif (10; 16; 21; 32; 35).

2.  Elément constructif selon la revendication 1, caractérisé en ce que les guides d'ondes lumineuses (24; 25; 30) sont insérés dans des tubes de gainage (26; 27; 31), qui sont disposés à l'intérieur ou à l'extérieur de l'élément constructif (21; 32 ou 16) et sont assemblés rigidement à ce dernier, et en ce que les guides d'ondes lumineuses (24; 25; 30) sont précontraints mécaniquement dans les tubes de gainage (26; 27; 31) et, par compression du tube de gainage (26; 27; 31) avec une masse adhérant sur ce dernier et sur le guide d'ondes lumineuses (24; 25; 30), sont assemblés rigidement au tube de gainage (26; 27; 31) au moins sur une partie de leur longueur, de sorte que la force de traction produite en eux est transférée sur le tube de gainage.

3.  Elément constructif selon la revendication 1 ou 2, caractérisé en ce que les guides d'ondes lumineuses (30) sont disposés sur ou dans l'élément constructif (32) en suivant l'allure de la contrainte de traction.

4.  Elément constructif selon la revendication 1 ou 2, caractérisé en ce que les guides d'ondes lumineuses (13; 24; 25; 37) sont disposés parallèlement à la direction de force sur les faces extérieures ou à l'intérieur de l'élément constructif (10; 21; 35).

5. Elément constructif selon l'une des revendications 2 à 4, caractérisé en ce que les guides d'ondes lumineuses (24; 25) ne sont assemblés rigidement aux tubes de gainage (26; 27) qui les entourent que dans la région de contrainte de traction (Z1; Z2; Z3) de l'élément constructif (21), et sont guidés librement dans les tubes de gainage (26; 27) dans les autres régions.

6. Elément constructif selon l'une des revendications 1 à 5, caractérisé en ce que les guides d'ondes lumineuses (13; 18) sont précontraints sur leur lieu de pose, et sont assemblés sur toute leur longueur à l'élément constructif par collage ou incorporation dans sa masse.

7. Elément constructif selon l'une des revendications 1 à 5, avec au moins une fibre optique dans un gainage qui l'entoure, caractérisé en ce que la fibre optique (40) est précontrainte contre le gainage (41) qui l'entoure et est assemblée, sous contrainte de traction axiale, sur toute sa longueur au gainage (41).

-1/1-

FIG.1

FIG. 2

FIG. 3

FIG. 4

FIG. 5

FIG.6

FIG. 7

FIG.8

FIG.10

FIG. 9